(19) Europäisches Patentamt
European Patent Office
Office européen des brevets

(11) **EP 1 675 669 B1**

(12) **EUROPEAN PATENT SPECIFICATION**

(45) Date of publication and mention
of the grant of the patent:
**14.07.2010 Bulletin 2010/28**

(51) Int Cl.:
***B01D 39/00*** *(2006.01)*

(21) Application number: **04768567.2**

(22) Date of filing: **22.09.2004**

(86) International application number:
**PCT/GB2004/004023**

(87) International publication number:
**WO 2005/028076 (31.03.2005 Gazette 2005/13)**

(54) **SUPPORT PANEL**

TRAEGERPLATTE

PANNEAU DE SUPPORT

(84) Designated Contracting States:
**AT BE BG CH CY CZ DE DK EE ES FI FR GB GR
HU IE IT LI LU MC NL PL PT RO SE SI SK TR**

(30) Priority: **22.09.2003 GB 0322166
26.09.2003 GB 0322659**

(43) Date of publication of application:
**05.07.2006 Bulletin 2006/27**

(73) Proprietor: **Enviromental Building Partnership
Limited
Aberdeen AB10 1FW (GB)**

(72) Inventor: **IMBABI, M. S-E.,
The Univ. of Aberdeen
Aberdeen AB24 3UE (GB)**

(74) Representative: **Suèr, Steven Johannes et al
Ablett & Stebbing
Caparo House
101-103 Baker Street
London W1U 6FQ (GB)**

(56) References cited:
**EP-A- 0 309 776**

## EP 1 675 669 B1

**Description**

The present invention relates to support panels and in particular multi-function open or otherwise permeable panels for providing one or more of structural support, enhanced uniform airflow, edge termination, sealing and enhancing alignment, in relation to permeable media. Such media may be structurally weak (i.e., not self-supporting) dynamic insulation media when applied to breathing buildings and structures.

In this regard, a revolutionary breathing wall cladding technology and a multiplicity of modular cladding panel designs that use fibre-based and other dynamic insulation media, to achieve up to 30% energy savings above current conventional insulation standards, have been developed by the present applicant. As outdoor air is drawn into the building through one or more layer(s) of dynamic insulation, contra-flow heat exchange occurs and heat normally lost through conduction is instead used to preheat ventilation air.

The panels also act as highly efficient, maintenance-free filters of airborne particulates down to sub-micron scale for the life of the building, with similar filtration performance anticipated for biological and chemical filtration.

Important outcomes of this are greatly improved thermal insulation performance and enhanced indoor air quality, where high fresh-air ventilation rates can henceforth be achieved without the penalty of excessive energy consumption using simple HVAC plant. Equally important, the cladding panels filter particulates and other forms of airborne pollution to HEPA standards for the life of the building (60+ years) to protect building occupants from harm, and in the process clean up the outdoor environment, 24 hours a day and 365 days a year.

Such breakthroughs in wall-cladding technology require knowledge of how to design and build dynamically insulated breathing buildings or structures that are optimised for performance, quality, durability and longevity. Specifically, the dynamic insulation component of the cladding needs to deliver low energy consumption, high indoor air quality and outstanding filtration performance without premature clogging for the life and location of the building or structure. The result is a new type of building or structure that achieves direct, intimate, responsive coupling between the indoor and outdoor environments via a cladding system that enhances air quality and energy efficiency without sacrificing functionality or occupant safety.

For dynamic insulation to function optimally it is necessary for incoming ventilation air to flow uniformly through the largest possible area of a building's or structure's breathing envelop, but for infiltration or leakage flows through gaps, cracks, leaky doors and windows, etc., to be reduced to a minimum, or eliminated. Fibre-based and many other air permeable dynamic insulation media are moreover generally not self-supporting (i.e., they are weak structurally), making their precise placement and long-term size stability and fixity within the cladding panel or system problematic. In addition it is difficult, if not impossible, to achieve a seamless, airtight joint between such materials and the rigid encapsulating structures used in a cladding panel or system. Finally, any occlusion of airflow through the inlet and outlet faces of fibre-based dynamic insulation media, for example by external bracing, would reduce the effective face area and degrade performance.

US 5,198,626 discloses lining for component portions of an automobile for absorbing sound and reflecting heat. An aluminum lining panel is provided having a double corrugated contour resulting in pyramids, with the peaks of the corrugations being perforated. A sound absorbing fleece is then provided over the peaks of the corrugations. The aluminum lining panel acts to reflect heat, whist the perforations permit the transmission of sound waves into the sound absorbing fleece so that the sound can be absorbed. According to a first aspect of the present invention there is provided a breathing wall air permeable panel for an intermediate cladding layer having filtering characteristics, said breathing wall air permeable panel comprising:- a plurality of projections interconnected in a lattice configuration, said projections each having a tip portion, the respective tip portions being arranged to face in a common direction for engagement, in use, with said intermediate cladding layer, each said projection further having a base periphery at which adjacent projections are interconnected, characterised by the base peripheries being interconnected such that apertures are defined between the base peripheries in the lattice configuration.

Preferably, said projections have a pyramidal form.

Conveniently, the projections are provided as a hollowed element.

In preferred embodiments, the projections are configured to restrict penetration thereof into the intermediate cladding layer.

Conveniently, the cross-sectional area of each projection increases along its longitudinal axis away from their tip portion.

Conveniently, the panel with projections as hollowed element is pressed from a single sheet.

Preferably, the panel with projections as hollowed element is moulded from a plastics material.

Preferably, the panel with projections as hollowed element is formed of fire retardant materials.

Preferably, in use with the panel with projections as hollowed element at or adjacent the intermediate layer, the apertures present an opening of expanding volume onto the intermediate layer.

According to a second aspect of the present invention, there is provided a building cladding system comprising: an intermediate cladding layer having filtering characteristics; and an air permeable panel for supporting said intermediate cladding layer, said air permeable panel comprising a plurality of projections interconnected in a lattice configuration, said projections each having a tip portion, the respective tip portions being arranged to face in a common direction to engage with the intermediate cladding layer, each said projection further having a base periphery at which adjacent projections are interconnected, characterised by the base peripheries being interconnected such that apertures are defined between the base peripheries in the lattice configuration.

Conveniently, the projections are provided as a hollowed element. Then, the following embodiments are preferred:

Preferably, the intermediate cladding layer has a graduated filtering profile.

Preferably, the filtering characteristics of the intermediate cladding layer are such as to trap relatively large particles towards an outer surface thereof and to trap relatively smaller particles towards the inner surface thereof.

Preferably, the intermediate cladding layer has thermal and/or sound insulating properties.

Preferably, intermediate cladding layer comprises one or more of:- mineral wool, wet-blown cellulose and glass wool. Preferably, the intermediate cladding layer is provided in the form of one or more of:- membranes, fibres, pulp or cellular based (foam or sponge) materials, or modified aerated concrete.

Preferably, the intermediate cladding layer comprises filter materials for one or more of:- particulate emissions, gas pollutants, chemical agents and biological agents.

Preferably, the intermediate cladding layer is provided in the form of panel units.

Preferably, the panel units are provided in modular format.

Preferably, the intermediate cladding layer is formed of a plurality of one or more separate filter layers, of different filtering characteristics.

Preferably, the intermediate cladding layer is selected to extract a specified range of particle sizes, gaseous pollutants, chemical pollutants, and/or biological agents.

Preferably, the separate filter layers of the intermediate cladding layer together define substantially the complete filter spectrum of particulate and other pollution.

Preferably, the or each filter layer of the intermediate cladding layer is independently replaceable.

Preferably, the or each filter layer of the intermediate layer comprises one or more disposable filter elements.

Preferably, the building cladding system further comprises a second air permeable panel, wherein said air permeable panels are provided on both faces of said intermediate cladding layer.

Preferably, the building cladding system further comprises a wall member, adjacent the panel and coupled thereto.

Preferably, the building cladding system further comprises internal and external wall members within which the panel and intermediate cladding layer are provided.

Preferably, the building cladding system further comprises one or more edge members, configured to interconnect adjacent intermediate cladding layers.

Preferably, the edge members have limbs in a cross formation, the limbs being inclined similarly to surfaces of the projections on adjacent panels for abutment thereto.

In this regard, examples of the present invention will be described below with reference to the drawings, of which:-

Figure 1 shows in plan view and part-sectional view panel geometry of the present invention;
Figure 2 shows panel geometry in a 5 by 5 cell sample;
Figure 3 shows sections through core dynamic insulation elements of the present invention;
Figures 4 to 6 show results of testing in relation to the present invention; and
Figure 7 shows a cross-sectional view of a cladding arrangement incorporating the present invention.

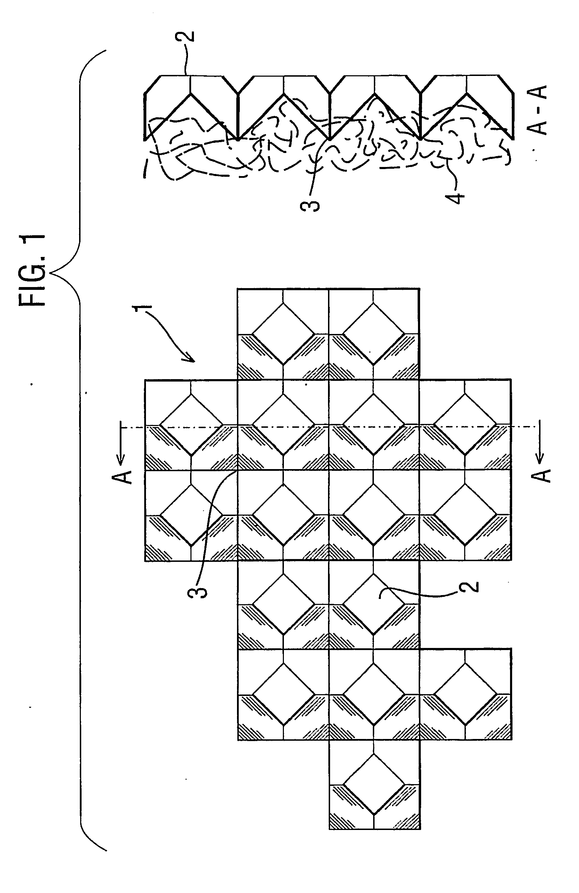

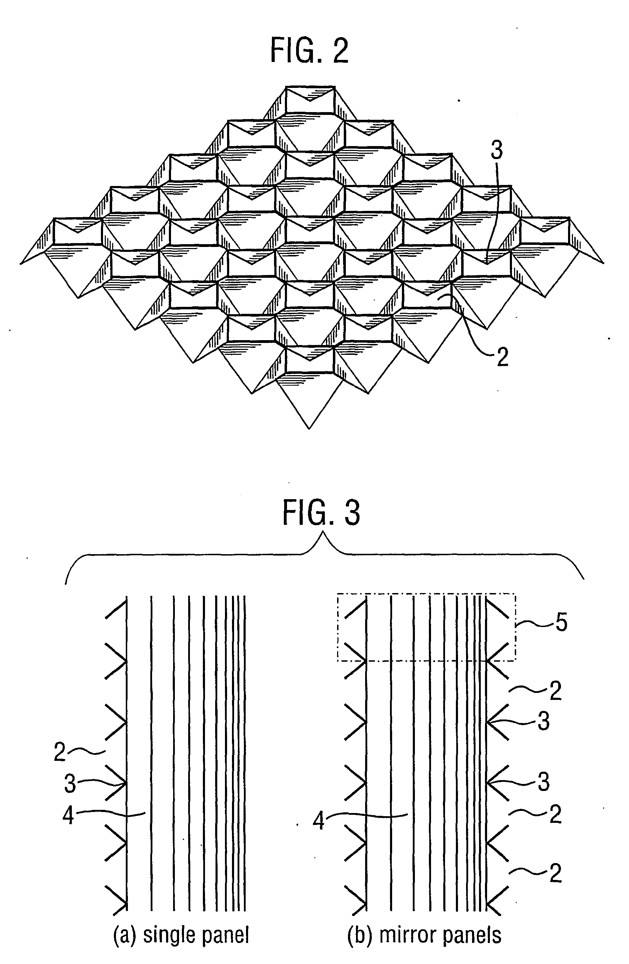

As shown in Figures 1 and 2, the present invention provides a simple and elegant solution to the above mentioned and other problems. In particular, one or more relatively rigid panel(s) 1 form a regular geometric pattern of truncated (open) or otherwise permeable outward-facing nodes 2 and pointed inward-facing anti-nodes 3 to grip into fibre-based dynamic insulation media 4. The dimensions are scalable and fabrication material choice wide, but the geometry of the support/encapsulation panels is very specific. A representative partial sample of a single panel is depicted in Fig. 1 and 2.

Turning to Figure 3, this figure describes two possible embodiments of a core dynamic insulation element for a multitude of external wall, roof or floor types forming parts of the envelope of a breathing building or structure.

Single and twin/mirrored panel(s) 1 encapsulating a layer(s) of dynamic insulation media 4 are shown in the 2-D schematics in Fig. 3. In core element (b) the truncated nodes 2 from a mirror pair of aligned encapsulating panels 1 provide the outward-facing openings through which air flows uniformly through the media 4, and inward-facing pairs of pointed anti-nodes 3 that grip the dynamic insulation without occluding the faces of the media. These anti-nodes have a pocket or hollowed configuration. Also noteworthy is the shape of each cell pair 5, which acts as diffusion-contraction unit to enhance uniformity of the airflow entering the cell and passing through the media. Such cell pairs form a repeating structure that, together with the finite value of permeability of the media ensures good uniformity of flow through the core element, irrespective of what inlet/outlet conditions are imposed. Thus, where the air is introduced into the wall panel and/or where it is extracted from the panel would, in practice, have little or no detrimental effect on flow uniformity through the media.

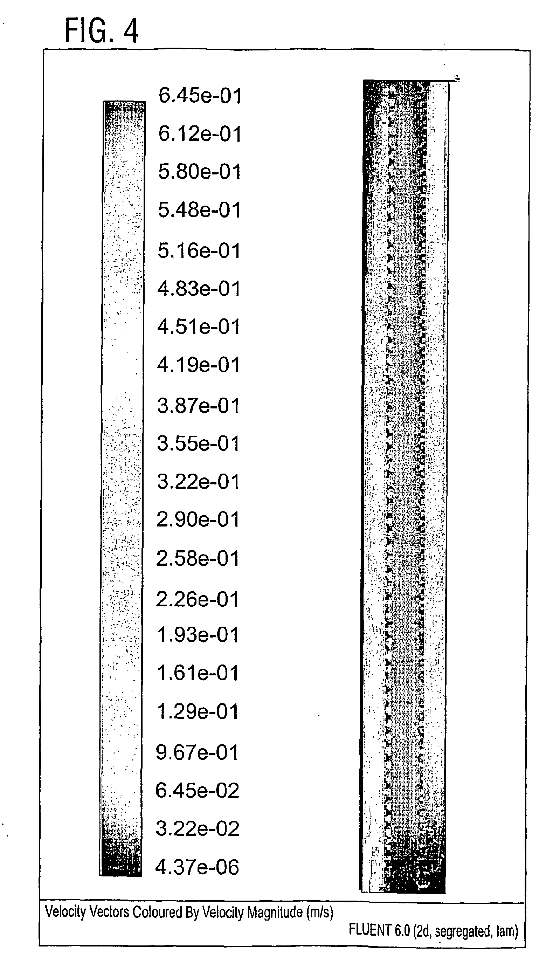

This uniquely desirable behaviour is demonstrated in the CFD results in Figs. 4, 5 and 6, obtained for a ventilated rainscreen-cladding panel incorporating such a dynamic insulation core element. Results for core element (a), employing a single panel over the inlet face of the media, should be nearly as good.

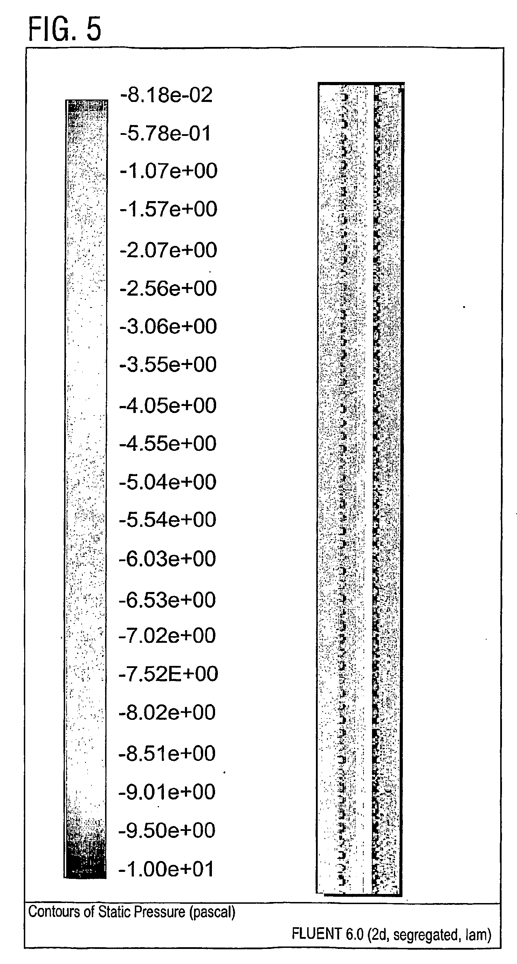

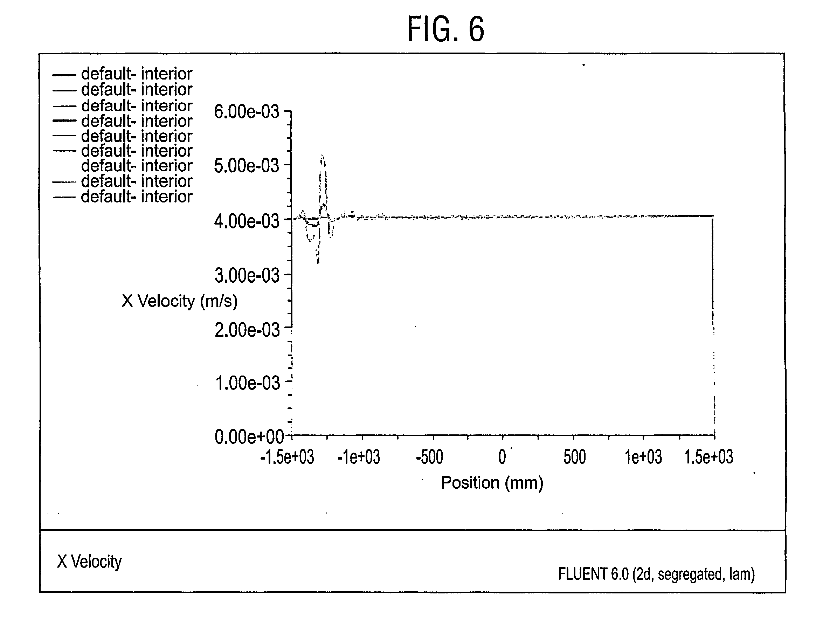

With reference to Figs. 4 and 5, outdoor air is drawn into the cladding panel when the breathing building in which it is fitted is depressurised. The air queues up in the gap between the rainscreen and core cladding element (the inlet plenum), flows uniformly through the dynamic insulation media and thereafter fills the space behind the internal wall skin (the outlet plenum) before being dumped, preheated and filtered, into the room or air handling system. The inlet vent of the cladding panel in this particular case was located at the bottom, and the outlet vent at the top. This results in the very flat (less than 2% variation) velocity profile through the encapsulated dynamic insulation media shown in Fig. 6. Similar results were obtained for mid-height vents, directly opposing vents, and many other variations of inlet/outlet vent location, inlet/outlet plenum size, etc., thus ensuring optimum performance irrespective of where the inlet and outlet vents are located. In each and every case examined all of the breathing wall area was effectively utilised, freeing the breathing building designer of all of the constraints and limitations previously associated with this form of construction.

The particular geometry of the supporting/encapsulating panels that form part of the core dynamic insulation cladding element shown in Figs. 1 and 2 will henceforth be referred to as diamond lattice, since the planes forming this geometry have a diamond-shaped profile. The anti-nodes 3 are of a pyramidal form, with a point tapering to an octagonal base. Adjacent anti-nodes are connected at four of the eight sides of the octagonal base, with apertures 2 thereby being formed at the nodes between the anti-nodes in the lattice arrangement. In side view, the consequent profile is undulating, the panel as a whole resembling an apertured egg carton configuration.

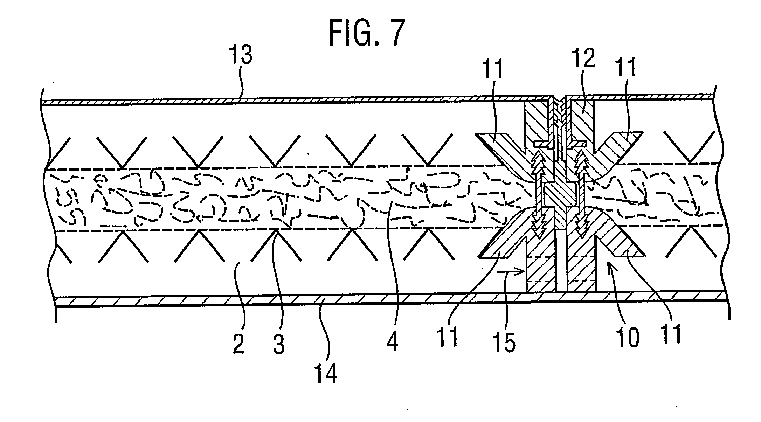

Variations on this geometry, for example using curved surfaces (e.g., cones instead of pyramids) to achieve similar functionality are possible. The cells of the lattice are uniformly arrayed along length and width dimensions by design. Thus any desired size of breathing wall area and insulation thickness can be cut and manufactured from generic, standard-size panels, using a generic, thermally-isolating edge termination and sealing scheme such as that illustrated in 2-D in Fig. 7. In this respect a edge termination and connection member 10 is shown between two panels. The edge termination and connection member has limbs 11 arranged in a cross formation, these limbs abut against similarly inclined elements of the panel 1 to thereby provide a secure and reliable seal between adjacent panels and their dynamic insulation. As shown, the edge termination and connection member may moreover be coupled to a wall external rainscreen 13 or an internal wall skin 14 through arms 12. Cross panel ducting 15 may also be provided in the edge termination and connection member.

This feature enables a wide range of dynamic insulation cladding panel sizes and specifications to be achieved using a single generic panel type, and matching generic sealing/termination strip, with all the advantages that this brings from a manufacturing perspective. It also means that the core dynamic insulation element can be readily used in traditional and retrofit building projects as a straight, slot-in replacement for conventional insulation. Inlet and outlet plenums and vents through exterior envelope walls will naturally be required, and a means of depressurising the building to induce ventilation airflow found in order to achieve breathing building functionality.

The inventors have hence developed an innovative support, packaging and air distribution system for fibre-based media that in CFD simulation has been shown to facilitate uniform airflow across a large area of dynamic insulation - i.e., a breathing wall. The system also enables effective edge sealing of the media to eliminate unwanted leakage, allows pre-fabrication of a range of modular breathing wall cladding panels, and permits the generic replacement of conventional insulation in most retrofit installations. In this connection, as cool ventilation air is drawn into a warm building through the breathing wall, air flows inwards in the opposite direction to the heat being conducted outwards as shown in the figure below. The *contra-flow* of mass versus heat fluxes results in the cool air picking up heat that would normally be lost through conduction, effectively yielding a reduction in the dynamic U-value of the wall and higher overall insulation efficiency. One can incorporate the dynamic U-value into an energy and airflow balance for the whole building to estimate the overall energy savings. This analysis, which can be carried out on a spreadsheet is ideal for the conceptual design of buildings. The dynamic U-value $U_d$ for a multi-layer envelope can be calculated from the total thermal resistance of the wall $R_s$ and the air flow through the wall $v$ :

$$U_d = \frac{v \rho_a c_a}{R_s \left( \exp \left( v \rho_a c_a R_s \right) - 1 \right)} \tag{1}$$

where $\rho_a$ and $c_a$ are the density and specific heat capacity of air.

To illustrate the effect of airflow rate through a breathing wall, consider a 200 mm thick layer of wet-blown cellulose insulation with a static (i.e., in the absence of airflow, or $v = 0$) U-value of $U_s$ = 0.168 W/m²K. At an arbitrarily very small airflow velocity of 0.000278 m/s (1 m/hr) the dynamic U-value for this insulation falls to $U_d$ = 0.058 W/ m²K, or $0.33U_s$. At a more realistic (for breathing buildings) airflow velocity of 0.00278 m/s (10 m/hr) the dynamic U-value falls further to 1.7 E-8 W/m²K- i.e., it becomes affectively zero. A significantly thinner 40 mm thick layer of insulation would under similar conditions yield a dynamic U-value $U_d$ = 0.13 W/ m²K.

Similar energy savings with dynamic insulation also occur when warm outside air is drawn into a cool building in hot summer months, though in this case the heat and mass flows are in the same direction. As the warm air flows inwards it loses some of it's heat to the breathing wall, effectively reducing the temperature gradient between the ambient outdoor and the outward-facing wall surface, and therefore the U-value of the wall. The co-flow cooling behaviour of dynamic insulation is described in a similar manner to contra-flow heating behaviour, where the first reduces the cooling load and the latter reduces the heating load required for optimum indoor conditions. This dual functionality of dynamic insulation means that breathing buildings can continue to function optimally irrespective of seasonal, diurnal, or any other cyclical variation in ambient conditions. Only cooling in hot-humid conditions presents condensation problems, but these too may be resolved by the application of active or passive dehumidification methods.

Common air filtration media include membranes, foam-type cellular materials, pulps, and fibres. The latter represent an attractive choice for use in dynamically insulated buildings due to their excellent performance in the $PM_{2.5}$ - $PM_{10}$ range at low flow velocity, wide availability, utility, low cost, and prevalence (a $PM_{10}$ content is the suspended particulate matter in the air below 10 microns). Investigations reveal that potentially suitable natural and man-made fibre-types and products already exist and are used as conventional insulation media.

In order to evaluate the filtration performance of breathing wall panels, a 1-D, multi-layer particle filtration model has been developed and outlined. This model has been further developed to investigate the filtration performance of a conventional, fibre-based insulation material (Glasswool) in filtering $PM_{10}$, and to address the following questions:

(a) What is the efficiency of filtration from a commercial insulation layer under conditions determined by dynamic insulation?
(b) What is the lifetime of the insulation layer - i.e., when, over time, will it become clogged?

A single-fibre model, was used to derive efficiency. This was coupled with an iterative representation of clogging in fibrous filters. The model will be calibrated using data from experimental tests and field trials, to account for 3D effects, etc., to be reported in due course.

The single fibre model:

The single-fibre model estimates the clean filter removal efficiency $E$, prior to particle deposition, using an expression of the form in Eq.(2) below:

$$E = 1 - \exp\left\{-\frac{4\alpha\eta Z}{(1-\alpha)d_f \pi}\right\} \qquad (2)$$

Where $\alpha$ is the fibre density (packing fraction), $d_f$ the fibre diameter, and Z the insulation layer thickness. $\eta$, the collection efficiency, is the sum of the collection efficiencies ascribed to three different collection mechanisms, namely Brownian motion or diffusion ($\eta_d$), inertial deposition ($\eta_{in}$) and impaction ($\eta_{im}$). For clean fibres, this parameter is obtained as:

$$\eta = \eta_d + \eta_{in} + \eta_{im} \qquad (3)$$

The above applies to filtration efficiency through a uniform layer of dynamic insulation, but has been extended to enable the study of multi-layer depth filtration, since the latter is necessary to avoid premature clogging and achieve longevity. The corresponding expressions for multi-layer filtration efficiency are of the form :

$$E_{f,J,l,t_{1+k}} = 1 - \exp\left(\frac{-4 \cdot \alpha \cdot \eta_{f,l} \cdot Z_J}{\pi \cdot \left(1 - \alpha - \alpha_{p,J,t_{1+k}}\right) \cdot d_f}\right) \quad (4)$$

$$\eta_{f,J,l,t_{1+k}} = \eta_{f,J,d,l} + \eta_{f,J,in,l} + \eta_{f,J,im,l} = \eta_{f,J,l} \quad (5)$$

Where $\eta_{f,J,l}$ is the time-invariant single-fibre collection efficiency for layer $J$, and $(1-\alpha-\alpha_{p,J,t_{1+k}})$ is the permeability of the layer.

Dendrite formation and clogging model:

In a loaded fibre filter the internal structure changes over time, as branch-like dendrites form through the agglomeration of particles within the filter media. Some of these dendritic fibres themselves start to act as filter fibres, increasing the effective packing density over time. The process of dendrite formation is extremely complex and difficult to predict, but the averaged effects on filtration performance, analogous to increasing fibre diameter and packing density in the early stages, with cake formation and terminal clogging ultimately, are more accessible.

With respect to the effects of dendrites a number of assumptions have been made in the model. They are (a) the particle aerosol will homogeneously load the filter, (b) all collected particles form dendrites but not all dendrites will be involved in further collection, and (c) the ones involved in further collection will be determined empirically once the model has been developed.

In a similar manner to Eqs.(4) and (5), the collection efficiency of dendrites is given for time increments

$$k \geq 1, \quad 1 \leq J \leq N, \quad 1 \leq l \leq n_r$$

$$E_{p,J,l,t_{1+k}} = 1 - \exp\left(\frac{-4 \cdot \alpha_{p,J,t_{1+k}} \cdot \eta_{p,J,l,t_{1+k}} \cdot Z_J}{\pi \cdot \left(1 - \alpha - \alpha_{p,J,t_{1+k}}\right) \cdot \overline{d_{p,J,t_{1+k}}}}\right) \quad (6)$$

$$\eta_{p,J,l,t_{1+k}} = \eta_{p,d,l} + \eta_{p,in,l} + \eta_{p,im,l} \quad (7)$$

Where $d_p$ is the mean diameter of dendrites, obtained from:

$$\overline{d_{p,J,t_{1+k}}} = \frac{\overline{d_{p,J,t_{1+k-1}}} \cdot \alpha_{p,J,t_{1+k-1}} \cdot \rho_p \cdot Z_J \cdot S + \sum_{l=1}^{n_r}\left(m_{f,J,l,t_{1+k}} + m_{p,J,l,t_{1+k}}\right) \cdot d_{p,l}}{\alpha_{p,J,t_{1+k-1}} \cdot \rho_p \cdot Z_J \cdot S + \sum_{l=1}^{n_r}\left(m_{f,J,l,t_{1+k}} + m_{p,J,l,t_{1+k}}\right)} \quad (8)$$

Field test rig:

Two field test rigs, to facilitate calibration of the filtration model, have been completed. They will be used to measure the cumulative pressure drop across dynamic insulation / filter media as particulate matter accumulates over a period 6 - 12 months for known variable loading.

The test rigs comprise a durable pipe housing with shielded intake and radial exhaust vents, filter media holder, axial extract fan, and low pressure transducer/data logger module.

The insulation/filter media employed in the tests is VG4LWRO 4" oiled graduated glass, supplied by McLeod Russell. It has the following specifications - weight dry: 500-540 g/m$^2$; weight oiled: 640 g/m$^2$; fibre diameter: 25-30 microns; free thickness: 101.6mm $\pm$ 6.3mm Compressed thickness 54mm $\pm$3; The oil is chlorinated paraffin. Packing fraction was estimated for lab-measured permeance values [15]. The uncalibrated model was used to provide preliminary answers to the crucial questions of filtration efficiency over time and lifetime before clogging. A simple scenario, built around a small office suite in a polluted environment and its ventilation requirements, was developed and used to generate a set of results from the model. The results show the model behaving in a predictable manner, and very reassuring in terms of the filtration efficiency achievable and panel life before clogging occur.

To generate the conditions required for ventilation air, typical office suite conditions provided a convenient template. CIBSE guideline [191 indicate that 16 litres of air has to be provided per person per second in a smoking (i.e., worst case) environment. The test conditions are for 5 people in an office demanding a volumetric fresh air flow rate of 80 1/s through 10 m$^2$ of breathing wall area (the ventilation source). The resulting airflow velocity through the wall thus works out as 0.008 m/s. The definition of clogging was chosen as that point where the pressure drop required to provide acceptable levels of ventilation air exceeded 40 Pa (beyond which opening / closing doors becomes difficult). The simulated pollution imposed was for Marylebone Road in London, where the average yearly $PM_{10}$ level is 48 $\mu$g/m3, most of which is from incomplete combustion in motor vehicle engines. The density of the pollutant was assumed to be 1850 kg.m-3, at the top end of the pollutant spectrum. Temperature was taken to be 291K.

The trial, only part of which is reported here, was a 3-variable, 4-level full factorial design with no replication, resulting in a total of 64 sets of results. The effects of varying fibre diameter and packing fraction through depth were investigated for a graded insulation layer of thickness 100 mm, divided into 5 progressively denser slices of equal depth. The variables examined were fibre diameter (10 - 55$\mu$), initial packing fraction (0.008 - 0.011), and the corresponding packing fraction gradients (0.0035 - 0.002 per slice). For each time increment, the efficiency of each slice at filtering each particle diameter of pollutant was calculated. That pollutant not collected in the first slice was transferred to the next slice, etc. In this way, the efficiency of the entire layer was calculated.

Space restrictions only permit presentation of the results of greatest interest, namely the minimum efficiency of particulate filtration during the first time increment for fresh media, and the maximum pressure drop across the insulation media over time. As the fibre diameter reduces in size so the efficiency of collection and the pressure drop increase, as shown in the preceding figure. The initial particle filtration efficiency for 10 and 25 micron fibres was thus greater than 99.8%, with corresponding pressure drops of 25 and 19 Pa at 60 years respectively.

The evolution of pressure drop with time during a 60 year period is shown in the figure below for an insulation/ filter layer of 55 micron fibre diameter, initial packing fraction of 0.011 and incremental increase of 0.002 per slice. As fibre diameter decreases the pressure drop increases, in the same way that reducing the packing fraction increases pressure drop, all other variables being the same.

Although energy was not considered explicitly in the office suite example, the significant savings (up to 30% reduction in energy use through dynamic U-value reduction, decreasing slightly as depressurisation level increases over time with clogging) outlined in section 1.1 and elsewhere are achievable.

With respect to in-room conditions for breathing buildings, air drawn in at extremely low velocities through the panel must be moved and distributed throughout the office space to ensure adequate ventilation. One method of doing this could be to pass the induced air over a LPHW heating pipe coil, preferably embedded within the panel (or via grills mounted on window sills) and served from circulating pipe mains, with a central boiler providing the primary heat source. The incoming air would acquire buoyancy as it is heated, enhancing both the flow of air through the panel and its circulation within the room in the manner of a conventional radiator.

The present invention hence provides multi-function open or otherwise permeable panel(s) that provide structural support, or facilitates uniform airflow, edge termination, sealing, alignment, etc., or any combination thereof, for permeable media and in particular, but not solely restricted to, structurally weak (i.e., not self-supporting) dynamic insulation media.

The multi-function panel(s) minimise occlusion of airflow through the inlet face of fibre-based dynamic insulation media to reduce the effective face area or degrade performance.

The multi-function panel(s) seek to enable uniform airflow through a large breathing wall area to be achieved.

The multi-function panel(s) further seek to enable effective in-room air movement and distribution in breathing buildings to be achieved easily and efficiently.

The present invention further provides a revolutionary breathing wall cladding technology and multiplicity of modular cladding panel designs, including but not restricted to ventilated rainscreen designs, that uses fibre-based and other structurally weak dynamic insulation media, supported and/or encapsulated by the aforementioned multi-function panel(s) to achieve significant energy savings, air filtration and/or high indoor air quality.

The present invention provides one or more multi-function panel(s) formed in a geometrical pattern of truncated (open) or otherwise permeable outward-facing nodes and pointed insulation-facing anti-nodes, as illustrated in Figs. 1 and 2, to freely support and/or encapsulate fibre-based and/or any other structurally-weak dynamic insulation media.

Further, the present invention provides any number of multi-function panel(s) encapsulating a layer(s) of dynamic insulation media as shown in the 2-D schematics in Fig. 3, henceforth referred to as core dynamic insulation elements.

The present invention encompasses a core dynamic insulation element(s) as defined above, that may be used for a multiplicity of external wall, roof or floor types forming the envelope of a breathing building or structure, as well as a cladding panel or cladding system employing any core dynamic insulation element.

The present invention further provides a ventilated rainscreen cladding panel design for dynamic insulation where outdoor air is drawn into the cladding panel when the building is depressurised, queues up in the gap between the rainscreen and core cladding element (the inlet plenum), flows uniformly through the dynamic insulation media and thereafter fills the space behind the internal wall skin (the outlet plenum) before being dumped, preheated and filtered, into the room or air handling system.

The present invention encompasses all variation(s) in geometry of multi-function panel(s) where truncated (open) nodes of any shape or form provide openings through which incoming and outgoing air can flow through the media, and anti-nodes grip the dynamic insulation media at opposing points without occluding the inlet and outlet faces of the media.

The present invention further encompasses all variation(s) in geometry of multi-function panel(s), where the shape of a cell pair enables it to act as a diffusion-contraction unit, to assist in achieving uniformity of airflow entering the cell and passing through the media.

The present invention further encompasses all variation(s) in geometry of multi-function panel(s) where cell pairs form a repeating structure that, together with the finite value of permeability of the media, ensure good uniformity of flow through the core dynamic insulation element irrespective of the inlet / outlet conditions imposed in practice.

The present invention further encompasses specific pyramid-based geometry of multi-function open or otherwise permeable supporting/encapsulating panel(s), forming part of the core dynamic insulation cladding element shown in Figs. 1 and 2, henceforth referred to as diamond lattice, after the planes forming this geometry which have a diamond-shaped profile

Further, the present invention encompasses all variation(s) in geometry of multi-function panel(s), for example using curved surfaces (i.e., cones instead of pyramids) to achieve similar functionality.

The multi-function panel(s) may be arranged so that the cells of the lattice are uniformly arrayed along length and width dimensions, so that any desired size of breathing wall area and insulation thickness can be cut and manufactured from generic, standard-size panels, using a generic edge-termination and sealing scheme, such as that shown in Fig. 7.

The present invention further encompasses generic, thermally isolating (i.e., non-bridging) edge-termination and sealing method and components shown in Fig. 7.

The multi-function panel(s)of the present invention may be used to support/encapsulate one or more layer(s) of conventional or dynamic insulation media, filtration media, fluid-permeable media, structurally weak media, or any media, or any combination thereof.

The multi-function panel(s) may be used to provide additional functionality through choice of constituent materials, or use of special coatings (e.g. $TiO_2$ as a $NO_x$ catalyst).

**Claims**

1. An breathing wall air permeable panel (1) for an intermediate cladding layer (4) having filtering characteristics, said breathing wall air permeable panel (1) comprising:-
a plurality of projections (3) interconnected in a lattice configuration, said projections (3) each having a tip portion, the respective tip portions being arranged to face in a common direction for engagement, in use, with said intermediate cladding layer (4), each said projection (3) further having a base periphery at which adjacent projections (3) are interconnected,
**characterised by** the base peripheries being interconnected such that apertures (2) are defined between the base peripheries in the lattice configuration.

2. An air permeable panel (1) according to claim 1, wherein said projections (3) have a pyramidal form.

3. An air permeable panel (1) according to claim 1 or 2, wherein the projections (3) are provided as a hollowed element.

4. An air permeable panel (1) according to any preceding claim, wherein the projections (3) are configured to restrict penetration thereof into the intermediate cladding layer (4).

5. An air permeable panel (1) according to claim 4, wherein the cross-sectional area of each projection (3) increases along its longitudinal axis away from their tip portion.

6. An air permeable panel (1) according to claim 3, wherein the panel (1) is pressed from a single sheet.

7. An air permeable panel (1) according to claim 3, wherein the panel (1) is moulded from a plastics material.

8. An air permeable panel (1) according to any one of claims 6 or 7, wherein the panel (1) is formed of fire retardant materials.

9. An air permeable panel (1) according to any one of claims 6 to 8, wherein in use with the panel (1) at or adjacent the intermediate layer (4), the apertures (2) present an opening of expanding volume onto the intermediate layer (4).

10. A building cladding system comprising:

   an intermediate cladding layer (4) having filtering characteristics; and
   an air permeable panel (1) for supporting said intermediate cladding layer (4), said air permeable panel (1) comprising a plurality of projections (3) interconnected in a lattice configuration, said projections (3) each having a tip portion, the respective tip portions being arranged to face in a common direction to engage with the intermediate cladding layer (4), each said projection further having a base periphery at which adjacent projections are interconnected,
   **characterised by** the base peripheries being interconnected such that apertures (2) are defined between the base peripheries in the lattice configuration.

11. A building cladding system according to claim 10, wherein the projections (3) are provided as a hollowed element.

12. A building cladding system according to claim 11, wherein the intermediate cladding layer (4) has a graduated filtering profile.

13. A building cladding system according to claim 12, wherein the filtering characteristics of the intermediate cladding layer (4) are such as to trap relatively large particles towards an outer surface thereof and to trap relatively smaller particles towards the inner surface thereof.

14. A building cladding system according to any one of claims 10 to 13, wherein the intermediate cladding layer (4) has thermal and/or sound insulating properties.

15. A building cladding system according to any one of claims 11 to 14, wherein intermediate cladding layer (4) comprises one or more of:- mineral wool, wet-blown cellulose and glass wool.

16. A building cladding system according to any one of claims 11 to 15, wherein the intermediate cladding layer (4) is provided in the form of one or more of:- membranes, fibres, pulp or cellular based (foam or sponge) materials, or modified aerated concrete.

17. A building cladding system according to any one of claims 11 to 16, wherein the intermediate cladding layer (4) comprises filter materials for one or more of:- particulate emissions, gas pollutants, chemical agents and biological agents.

18. A building cladding system according to any one of claims 11 to 17, wherein the intermediate cladding layer (4) is provided in the form of panel units.

19. A building cladding system according to claim 18, wherein the panel units are provided in modular format.

20. A building cladding system according to any one of claims 11 to 19, wherein the intermediate cladding layer (4) is formed of a plurality of one or more separate filter layers, of different filtering characteristics.

21. A building cladding system according to any one of claims 11 to 20, wherein the intermediate cladding layer (4) is selected to extract a specified range of particle sizes, gaseous pollutants, chemical pollutants, and/or biological agents.

22. A building cladding system according to claim 21, wherein the separate filter layers of the intermediate cladding layer (4) together define substantially the complete filter spectrum of particulate and other pollution.

23. A building cladding system according to any one of claims 20 to 22, wherein the or each filter layer of the intermediate cladding layer (4) is independently replaceable.

24. A building cladding system according to any one of claims 20 to 23, wherein the or each filter layer of the intermediate layer (4) comprises one or more disposable filter elements.

25. A building cladding system according to any one of claims 11 to 23, further comprising a second air permeable panel (1), wherein said air permeable panels (1) are provided on both faces of said intermediate cladding layer.

26. A building cladding system according to any one of claims 11 to 25, further comprising a wall member (14), adjacent the panel (1) and coupled thereto.

27. A building cladding system according to claim 28, comprising internal (14) and external (13) wall members within which the panel (1) and intermediate cladding layer (4) are provided.

28. A building cladding system according to claim 26 or 27, further comprising one or more edge members (10), configured to interconnect adjacent intermediate cladding layers (4).

29. A building cladding system according to claim 27, wherein the edge members (10) have limbs (11) in a cross formation, the limbs (11) being inclined similarly to surfaces of the projections (3) on adjacent panels (1) for abutment thereto.

**Patentansprüche**

1. Eine atmungsaktive, luftdurchlässige Wandplatte (1) für eine Zwischenverkleidungsschicht (4), die Filtereigenschaften aufweist, wobei die besagte atmungsaktive, luftdurchlässige Platte (1) Folgendes umfasst:-
Eine Vielzahl von Vorsprüngen (3), die in einer Gitterkonfiguration miteinander verbunden sind, wobei jeder der besagten Vorsprünge (3) einen Spitzenabschnitt aufweist und die betreffenden Spitzenabschnitte so angeordnet sind, dass sie in eine gemeinsame Richtung weisen, um bei der Anwendung eine formschlüssige Verbindung mit der Zwischenverkleidungsschicht (4) zu bilden, wobei jeder besagte Vorsprung (3) einen Basisrandbereich aufweist, an dem die angrenzenden Vorsprünge (3) miteinander verbunden sind,
die **dadurch gekennzeichnet sind, dass** die Basisrandbereiche miteinander verbunden sind, sodass die Öffnungen (2) zwischen den Basisrandbereichen in der Gitterkonfiguration abgegrenzt sind.

2. Eine luftdurchlässige Platte (1) gemäß Anspruch 1, worin die besagten Vorsprünge (3) die Form einer Pyramide haben.

3. Eine luftdurchlässige Platte (1) gemäß Anspruch 1 oder 2, worin die besagten Vorsprünge (3) als ein ausgehöhltes Element vorhanden sind.

4. Eine luftdurchlässige Platte (1) gemäß einem der vorhergehenden Ansprüche, worin die Vorsprünge (3) entsprechend gestaltet sind, damit sie nur begrenzt in die Zwischenverkleidungsschicht (4) eindringen können.

5. Eine luftdurchlässige Platte (1) gemäß Anspruch 4, worin die Querschnittsfläche jedes Vorsprungs (3) sich vom Spitzenabschnitt entlang seiner Längsachse vergrößert.

6. Eine luftdurchlässige Platte (1) gemäß Anspruch 3, worin die Platte (1) aus einem einzelnen Stück gepresst ist.

7. Eine luftdurchlässige Platte (1) gemäß Anspruch 3, worin die Platte (1) aus einem Plastikmaterial geformt ist.

8. Eine luftdurchlässige Platte (1) gemäß einem der Ansprüche 6 oder 7, worin die Platte (1) aus feuerhemmenden Materialien geformt ist.

9. Eine luftdurchlässige Platte (1) gemäß einem der Ansprüche 6 bis 8, worin die Öffnungen (2) bei Verwendung mit der Platte (1) an der oder angrenzend an die Zwischenschicht (4) ein Loch mit sich ausdehnendem Volumen auf die Zwischenschicht (4) darstellen.

10. Ein Verkleidungssystem für Gebäude, das Folgendes beinhaltet:

eine Zwischenverkleidungsschicht (4), die Filtereigenschaften besitzt; und
eine luftdurchlässige Platte (1) zur Abstützung der Zwischenverkleidungsschicht (4), wobei die besagte luftdurchlässige Platte (1) eine Vielzahl von Vorsprüngen (3) aufweist, die in einer Gitterkonfiguration miteinander verbunden sind und jeder der besagten Vorsprünge (3) einen Spitzenabschnitt aufweist; die betreffenden Spitzenabschnitte sind so angeordnet, dass sie in eine gemeinsame Richtung weisen, um eine formschlüssige Verbindung mit der Zwischenverkleidungsschicht (4) zu bilden, wobei jeder besagte Teil (3) einen Basisrandbereich hat, an dem die angrenzenden Vorsprünge (3) miteinander verbunden sind,
die **dadurch gekennzeichnet sind, dass** die Basisrandbereiche miteinander verbunden sind, sodass die Öffnungen (2) zwischen den Basisrandbereichen in der Gitterkonfiguration abgegrenzt sind.

11. Ein Verkleidungssystem für Gebäude gemäß Anspruch 10, worin die Vorsprünge (3) als ein ausgehöhltes Element vorhanden sind.

12. Ein Verkleidungssystem für Gebäude gemäß Anspruch 11, worin die Zwischenverkleidungsschicht (4) ein abgestuftes Filterprofil aufweist.

13. Ein Verkleidungssystem für Gebäude gemäß Anspruch 12, worin die Filtereigenschaften der Zwischenverkleidungsschicht (4) derart beschaffen sind, dass sie relativ große Partikel in Richtung einer Außenfläche davon und verhältnismäßig kleinere Partikel in Richtung einer Innenfläche davon abfangen.

14. Ein Verkleidungssystem für Gebäude gemäß einem der Ansprüche 11 bis 13 worin die Zwischenverkleidungsschicht (4) thermische und/oder schalldämmende Eigenschaften hat.

15. Ein Verkleidungssystem für Gebäude gemäß einem der Ansprüche 11 bis 14, worin die Zwischenverkleidungsschicht (4) aus einem oder mehreren der folgenden Materialien besteht: Mineralwolle, nass geblasene Zellulose und Glaswolle.

16. Ein Verkleidungssystem für Gebäude gemäß einem der Ansprüche 11 bis 15, worin die Zwischenverkleidungsschicht (4) in einer oder mehreren der folgenden Formen vorhanden ist:- Membrane, Fasern, Zellstoff- oder zelluläre (Schaum oder Schwamm) Materialien oder modifizierter Leichtbeton.

17. Ein Verkleidungssystem für Gebäude gemäß einem der Ansprüche 11 bis 16, worin die Zwischenverkleidungsschicht (4) Filtermaterialien für eine oder mehrere der Folgenden beinhaltet:- Feinstaubemissionen, Schadgase, chemische Stoffe und biologische Stoffe.

18. Ein Verkleidungssystem für Gebäude gemäß einem der Ansprüche 11 bis 17, worin die Zwischenverkleidungsschicht (4) in der Form von Platteneinheiten zur Verfügung steht.

19. Ein Verkleidungssystem für Gebäude gemäß Anspruch 18, worin die Platteneinheiten im Modulformat zur Verfügung stehen.

20. Ein Verkleidungssystem für Gebäude gemäß einem der Ansprüche 11 bis 19, worin die Zwischenverkleidungsschicht (4) aus einer Vielzahl von einer oder mehreren getrennten Filterschichten gebildet wird, die unterschiedliche Filtereigenschaften aufweisen.

21. Ein Verkleidungssystem für Gebäude gemäß einem der Ansprüche 11 bis 20, worin die Zwischenverkleidungsschicht (4) entsprechend ausgewählt wird, um eine bestimmte Bandbreite von Partikelgrößen, Schadgasen, chemischen Schadstoffen und/oder biologischen Stoffen zu entfernen.

**22.** Ein Verkleidungssystem für Gebäude gemäß Anspruch 21, worin die getrennten Filterschichten der Zwischenverkleidungsschicht (4) gemeinsam weitgehend das komplette Filterspektrum für Feinstaub- und sonstigen Verschmutzung abdecken.

**23.** Ein Verkleidungssystem für Gebäude gemäß einem der Ansprüche 20 bis 22, worin die oder jede Filterschicht der Zwischenverkleidungsschicht (4) unabhängig voneinander austauschbar ist.

**24.** Ein Verkleidungssystem für Gebäude gemäß einem der Ansprüche 20 bis 23, worin die oder jede Filterschicht der Zwischenverkleidungsschicht (4) ein oder mehrere Einwegfilterelemente enthält.

**25.** Ein Verkleidungssystem für Gebäude gemäß einem der Ansprüche 11 bis 23, das überdies eine zweite luftdurchlässige Platte (1) enthält, worin die besagten luftdurchlässigen Platten (1) sich auf beiden Stirnseiten der besagten Zwischenverkleidungsschicht befinden.

**26.** Ein Verkleidungssystem für Gebäude gemäß einem der Ansprüche 11 bis 25, das überdies ein Wandteil (14) umfasst, welches an die Platte (1) angrenzt und damit verbunden ist.

**27.** Ein Verkleidungssystem für Gebäude gemäß Anspruch 26, das interne (14) und externe (13) Wandteile umfasst, innerhalb derer sich die Platte (1) und die Zwischenverkleidungsschicht (4) befinden.

**28.** Ein Verkleidungssystem für Gebäude gemäß Anspruch 26 oder 27, das überdies ein oder mehrere Kantenteile (10) umfasst, die so gestaltet sind, dass sie sich mit den angrenzenden Schichten der Zwischenverkleidung (4) verbinden.

**29.** Ein Verkleidungssystem für Gebäude gemäß Anspruch 27, worin die Kantenteile (10) Schenkel (11) aufweisen, die in einer Kreuzform angeordnet sind, wobei die Schenkel (11) ähnlich zu den Oberflächen der Vorsprünge (3) auf den angrenzenden Platten (1) hin geneigt sind, um an diese anzustoßen.

**Revendications**

**1.** Un panneau perméable à l'air à paroi aérée (1) destiné à une couche de revêtement intermédiaire (4) présentant des caractéristiques de filtrage, ledit panneau perméable à l'air à paroi aérée (1) comprenant : -
une pluralité de projections (3) interconnectées dans une configuration en treillis, lesdites projections (3) ayant chacune une partie en pointe, les parties en pointe respectives étant agencées de manière à se trouver face à une direction commune en vue d'un attelage, utilisées avec ladite couche de revêtement intermédiaire (4), chacune dite projection (3) présentant en outre une périphérie de base au niveau de laquelle les projections contiguës (3) sont interconnectées.
**caractérisé en ce que** les périphéries de base sont interconnectées de manière à ce que des orifices (2) soient définis entre les périphéries de base dans la configuration en treillis.

**2.** Panneau perméable à l'air (1) selon la revendication 1, dans lequel lesdites projections (3) présentent une forme pyramidale.

**3.** Panneau perméable à l'air (1) selon la revendication 1 ou 2, dans lequel les projections (3) sont pourvues sous forme d'élément évidé.

**4.** Panneau perméable à l'air (1) selon l'une quelconque des revendications précédentes, dans lequel les projections (3) sont configurées de manière à restreindre leur pénétration dans la couche de revêtement intermédiaire (4).

**5.** Panneau perméable à l'air (1) selon la revendication 4, dans lequel la zone transversale de chaque projection (3) augmente le long de son axe longitudinal à distance de la partie en pointe.

**6.** Panneau perméable à l'air (1) selon la revendication 3, dans lequel le panneau (1) est pressé contre une feuille unique.

**7.** Panneau perméable à l'air (1) selon la revendication 3, dans lequel le panneau (1) est moulé à partir d'un matériau en matière plastique.

**8.** Panneau perméable à l'air (1) selon l'une quelconque des revendications 6 ou 7, dans lequel le panneau (1) est formé de matériaux ignifuges.

9. Panneau perméable à l'air (1) selon l'une quelconque des revendications 6 à 8, dans lequel, utilisés avec le panneau (1) au niveau ou contigus à la couche intermédiaire (4), les orifices (2) présentent une ouverture de volume expansible s'attelant à la couche intermédiaire (4).

10. Système de revêtement de bâtiment comprenant :

une couche de revêtement intermédiaire (4) présentant des caractéristiques de filtrage ; et
un panneau perméable à l'air (1) pour soutenir ladite couche de revêtement intermédiaire (4), ledit panneau perméable à l'air (1) comportant une pluralité de projections (3) interconnectées selon une configuration en treillis, lesdites projections (3) présentant chacune une partie en pointe, les parties en pointe respectives étant agencées de manière à se trouver en face d'une direction commune de manière à s'atteler à la couche de revêtement intermédiaire (4), chacune dite projection possédant en outre une base périphérique au niveau de laquelle des projections adjacentes sont interconnectées,
**caractérisé en ce que** les périphéries de base sont interconnectées de sorte que des orifices (2) soient définis entre les périphéries de base dans la configuration en treillis.

11. Système de revêtement de bâtiment selon la revendication 10, dans lequel les projections (3) sont pourvues sous forme d'un élément évidé.

12. Système de revêtement de bâtiment selon la revendication 11, dans lequel la couche de revêtement intermédiaire (4) présente un profil de filtrage gradué.

13. Système de revêtement de bâtiment selon la revendication 12, dans lequel les caractéristiques de filtrage de la couche de revêtement intermédiaire (4) sont aptes à piéger des matières particulaires relativement grandes se dirigeant en direction de sa surface extérieure et à piéger des matières particulaires relativement petites se dirigeant en direction de sa surface intérieure.

14. Système de revêtement de bâtiment selon l'une quelconque des revendications 11 à 13, dans lequel la couche de revêtement intermédiaire (4) présente des propriétés thermiques et/ou d'isolation acoustique.

15. Système de revêtement de bâtiment selon l'une quelconque des revendications 11 à 14, dans lequel la couche de revêtement intermédiaire (4) comprend un ou plus de : laine minérale, cellulose soufflée par voie humide et laine de verre.

16. Système de revêtement de bâtiment selon l'une quelconque des revendications 11 à 15, dans lequel la couche de revêtement intermédiaire (4) est pourvue sous la forme de l'une ou de plus de : - membranes, fibres, pulpe à papier ou matériaux à base cellulaire (mousse ou éponge) ou béton aéré modifié.

17. Système de revêtement de bâtiment selon l'une quelconque des revendications 11 à 16, dans lequel la couche de revêtement intermédiaire (4) comporte des matériaux de filtrage pour l'un ou plus de : - émissions de matières particulaires, polluants gazeux, agents chimiques et agents biologiques.

18. Système de revêtement de bâtiment selon l'une quelconque des revendications 11 à 17, dans lequel la couche de revêtement intermédiaire (4) est pourvue sous la forme d'unités de panneaux.

19. Système de revêtement de bâtiment selon la revendication 18, dans lequel les unités de panneaux sont pourvues sous un format modulaire.

20. Système de revêtement de bâtiment selon l'une quelconque des revendications 11 à 19, dans lequel la couche de revêtement intermédiaire (4) est formée d'une pluralité d'une couche de filtrage séparée ou plus possédant différentes caractéristiques de filtrage.

21. Système de revêtement de bâtiment selon l'une quelconque des revendications 11 à 20, dans lequel la couche de revêtement intermédiaire (4) est sélectionnée de manière à extraire une plage spécifiée de tailles de matières particulaires, de polluants gazeux, de polluants chimiques et/ou d'agents biologiques.

**22.** Système de revêtement de bâtiment selon la revendication 21, dans lequel les couches de filtrage séparées de la couche de revêtement intermédiaire (4) définissent ensemble sensiblement le spectre complet des matières particulaires et autre pollution.

**23.** Système de revêtement de bâtiment selon l'une quelconque des revendications 20 à 22, dans lequel la ou chaque couche de filtrage de la couche de revêtement intermédiaire (4) est indépendamment remplaçable.

**24.** Système de revêtement de bâtiment selon l'une quelconque des revendications 20 à 23, dans lequel la ou chaque couche de filtrage de la couche intermédiaire (4) comporte un élément de filtrage jetable ou plus.

**25.** Système de revêtement de bâtiment selon l'une quelconque des revendications 11 à 23, comprenant en outre un deuxième panneau perméable à l'air (1), dans lequel lesdits panneaux perméables à l'air (1) sont pourvus sur les deux faces de ladite couche de revêtement intermédiaire.

**26.** Système de revêtement de bâtiment selon l'une quelconque des revendications 11 à 25, comportant en outre un organe mural (14), contigu au panneau (1) et solidaire de celui-ci.

**27.** Système de revêtement de bâtiment selon la revendication 26, comprenant des organes muraux internes (14) et externes (13) au sein desquels sont pourvus le panneau (1) et la couche de revêtement intermédiaire (4).

**28.** Système de revêtement de bâtiment selon la revendication 26 ou 27, comprenant en outre un élément de bord ou plus (10), configuré(s) pour interconnecter des couches de revêtement intermédiaire contiguës (4).

**29.** Système de revêtement de bâtiment selon la revendication 27, dans lequel les éléments de bord (10) ont des membres (11) en formation transversale, les membres (11) étant inclinés de façon similaire aux surfaces des projections (3) sur des panneaux adjacents (1) en vue d'une butée contre eux.

# FIG. 1

A - A

EP 1 675 669 B1

# FIG. 2

# FIG. 3

(a) single panel       (b) mirror panels

## FIG. 4

6.45e-01
6.12e-01
5.80e-01
5.48e-01
5.16e-01
4.83e-01
4.51e-01
4.19e-01
3.87e-01
3.55e-01
3.22e-01
2.90e-01
2.58e-01
2.26e-01
1.93e-01
1.61e-01
1.29e-01
9.67e-01
6.45e-02
3.22e-02
4.37e-06

Velocity Vectors Coloured By Velocity Magnitude (m/s)

FLUENT 6.0 (2d, segregated, lam)

# FIG. 5

-8.18e-02

-5.78e-01

-1.07e+00

-1.57e+00

-2.07e+00

-2.56e+00

-3.06e+00

-3.55e+00

-4.05e+00

-4.55e+00

-5.04e+00

-5.54e+00

-6.03e+00

-6.53e+00

-7.02e+00

-7.52E+00

-8.02e+00

-8.51e+00

-9.01e+00

-9.50e+00

-1.00e+01

Contours of Static Pressure (pascal)

FLUENT 6.0 (2d, segregated, lam)

FIG. 6

X Velocity

FLUENT 6.0 (2d, segregated, lam)

EP 1 675 669 B1

## FIG. 7

EP 1 675 669 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5198626 A